# EUROPEAN PATENT SPECIFICATION

(11) **EP 4 461 997 B1**
(45) Date of publication and mention of the grant of the patent: **18.11.2026**
(21) Application number: 23172173.9
(22) Date of filing: 09.05.2023
(51) Int. Cl.: F16H 63/30

(54) **SHIFT DEVICE**
SCHALTVORRICHTUNG
DISPOSITIF DE CHANGEMENT DE VITESSE

(43) Date of publication of application: 13.11.2024
(73) Proprietor: ArvinMeritor Technology, LLC, Troy, MI 48084 (US)
(72) Inventor: Hanneder, Michael, Troy, 48084 (US); Bernoegger, Johannes, Troy, 48084 (US); Grünwald, Silvia, Troy, 48084 (US)
(74) Representative: Whitfield, Jack Stephen

(56) References cited:
- DE-A1- 10 359 092
- DE-B4- 102005 040 485
- FR-A1- 3 123 959

## Description

### FIELD OF THE INVENTION

The present invention relates to a shift device, and in particular, to a shift device for a shifting system.

### BACKGROUND OF THE INVENTION

In, for example, a vehicle transmission with an electrically actuated shifting system, it is important to prevent overloading of an actuator that performs a shift operation. To do this, conventionally, a shift device including a spring system is used. The spring system temporarily compensates for a shifting movement caused upon operation of the actuator, when a shift sleeve configured to engage and disengage gears of the transmission with a transmission shaft (e.g. a sliding collar or a dog clutch) is prevented from shifting during an engagement process with a corresponding gear, for example, due to a tooth-to-tooth position with the gear, or during a disengagement process with the gear, for example, due to torque still acting on the engagement between the shift sleeve and the gear. That is, even if the shifting of the shift sleeve is temporarily prevented, the actuator is allowed to complete the shifting movement and an overload of the actuator during the shift operation can be avoided. As a result, the spring system can prevent damage to the actuator and help prevent a reduction in its service life.

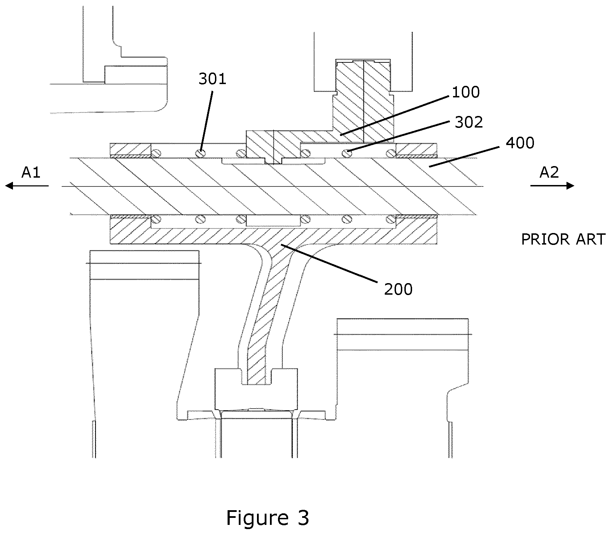

Conventionally, as shown in figure 3, the shift device including the spring system uses two springs 301, 302 (so-called blocker springs). When the actuator is operated and moves a first member 100 supported on a shaft 400 in a first axial direction A1 (e.g., to the left in figure 3), the movement is transmitted via the first spring 301 to a second member 200 supported on the shaft 400 and in communication with the shift sleeve. By compressing the first spring 301 in the axial direction, the spring system can temporarily compensate for the shifting movement, when the shifting of the shift sleeve is prevented, for example, due to tooth-to-tooth position with the gear. As a result, relative axial movement between the first and the second members 100, 200 occurs. When the tooth-to-tooth position with the gear is released, the first spring 301, being compressed, exerts an urging force (due to the elastic restoring force) on the first and second members 100, 200, which moves the second member 200 in the first axial direction A1 and completes the shifting of the shift sleeve. When the actuator is operated and moves the first member 100 into a second axial direction A2 (e.g., to the right in figure 3) opposite to the first axial direction A1, the corresponding effect is achieved by the compression of the second spring 302.

However, the conventional design of the shift device including the spring system is associated with disadvantages. Firstly, depending on the relative axial movement toward the first or the second axial direction A2, the elastic restoring force of either the first spring 301 or of the second spring 302 is applied. Consequently, the neutral position of the first member 100 with respect to the second member 200 is influenced by any difference in spring forces of the first and second springs 301, 302. Therefore, positional accuracy of the first member 100 with respect to the second member 200 is not sufficiently ensured, which may affect the shifting accuracy of the shift device. Furthermore, the requirements for the manufacturing tolerances of the springs 301, 302 are very high. Additionally, by sequentially arranging the first and second springs 301, 302 in the axial direction, an axial length of the spring system cannot be reduced without affecting the possible compensation distance for the axial movement. This conflicts with the generally desired goal of reducing the space required to be installed.

Therefore, there is a need for a comoactlv desianed shift device including a spring system that provides improved shifting accuracy. Document FR3123959A1 discloses, in the opinion of the Examining Division of the European Patent Office, a shift device falling within the wording of the pre-characterizing portion of claim 1.

DE10359092A1 provides a switching device for a motor vehicle gearbox with two coaxially sliding compression springs 30, 32 arranged on a shift rail 2. DE102005040485A1 discloses a switch gear for a transmission, with two helical springs 9, 11 arranged on a rail 2.

### TECHNICAL PROBLEM TO BE SOLVED

In view of the above, it is the object of the present invention to provide a compactly designed shift device that provides improved shifting accuracy.

### DISCLOSURE OF THE INVENTION

The object is achieved by a shift device having the features of independent claim 1. A shifting system including the shift device according to the invention is subject-matter of claim 10. Further advantageous developments are set out in the dependent claims.

According to the invention, the axial movement of a first member supported on a shaft is transmitted to a second member supported on the shaft and vice versa via an elastic member. By compression of the elastic member, a relative axial movement between the first member and the second member is allowed in both the first axial direction and the second axial direction opposite to the first axial direction. That is, when the first member is axially moved relative to the second member in the first axial direction, the elastic member is compressed, and the elastic restoring force of the elastic member urges the first member back to its initial position relative to the second member. When the first member is moved axially relative to the second member in the second axial direction, also in this case, the elastic member is compressed and the elastic restoring force of the elastic member urges the first member back to its initial position relative to the second member.

Therefore, in the shift device according to the invention, regardless of whether a relative axial movement occurs between the first and the second members in the first or second axial direction, the elastic restoring force of the same elastic member is applied. As a result, it is ensured that the initial position of the first member relative to the second member, in particular a neutral position of the shift device, is always in the same position. Therefore, the positional accuracy of the shift device can be ensured, resulting in excellent shifting accuracy of the shift device.

The elastic member compensates for the relative axial movement between the first and the second member in both the first and the second axial directions. Therefore, an installation space required for the spring system can be reduced.

According to the invention, the first member comprising a coupling portion for coupling with a coupling mechanism which is in communication with an actuator of a shifting system.

Further, according to the invention the shift device may further include two inner sleeves, which are axially movably supported on the shaft. In addition, the first member may comprise an outer sleeve, which is disposed radially outwardly of the inner sleeves. The outer sleeve may be axially movably supported on the shaft via the two inner sleeves. The elastic member may be arranged between the two inner sleeves.

Accordingly, the two inner sleeves may serve as bearing portions for the first member including the outer sleeve. The two inner sleeves are spaced apart by the elastic member arranged between the two inner sleeves. As a result, an excellent bearing of the first member on the shaft can be ensured despite the reduced installation space required for the spring system of the shift device. Therefore, tilting of the first member (and thus, jamming of the sleeve on the shaft) can be effectively prevented.

Optionally, the inner sleeve may have an outer abutment projecting radially outwardly from an outer peripheral surface of the inner sleeve. The outer sleeve may have, at each axial end, an inner abutment projecting radially inwardly from an inner peripheral surface of the outer sleeve. An axial movement of the inner sleeve relative to the outer sleeve towards a position, in which the inner sleeve protrudes from the outer sleeve, is restricted by the outer abutment of the inner sleeve abutting the inner abutment of the outer sleeve. In addition, the elastic member may be disposed radially inside the outer sleeve so as to urge the outer abutments of the inner sleeves into contact with the inner abutments of the outer sleeve. Therefore, as long as the elastic resilient force of the elastic member is high enough to urge the outer abutments of the inner sleeves into contact with the inner abutments of the outer sleeve, the initial position (i.e., the neutral position) of the first member is dependent only on the geometrical dimensions of the inner sleeves and the outer sleeve. Thus, the influence of fluctuations of elastic characteristics of the elastic member on the initial position of the first member can be suppressed. As a result, excellent shifting accuracy of the shift device can be achieved while simultaneously achieving a reduced required installation space for the spring system of the shift device.

Optionally, the second member may include first and second bearing portions for axially movably supporting the second member on the shaft. The outer sleeve of the first member accommodating the elastic member, and the inner sleeves may be interposed between the first and second bearing portions of the second member. As a result, an excellent bearing of the second member on the shaft can be ensured while simultaneously achieving a reduced required installation space for the spring system of the shift device. Therefore, tilting of the second member can be effectively prevented.

Optionally, when the first member is in the initial position relative to the second member, one of the inner sleeves may abut the first bearing portion and the other of the inner sleeves may abut the second bearing portion. Therefore, the initial position (i.e., the neutral position) of the first member relative to the second member is dependent only on the geometrical dimensions of the inner sleeves, the outer sleeve of the first member and the bearing portions of the second member. Thus, the influence of fluctuations of elastic characteristics of the elastic member on the initial position of the first member relative to the second member can be suppressed. As a result, excellent shifting accuracy of the shift device can be achieved.

Optionally, the inner sleeve may include an axial protrusion partially covering an outer peripheral surface of an axial end portion of the elastic member. Therefore, the elastic member can be centered via the axial protrusion of the inner sleeve. Hence, centering or guiding of the elastic member via the shaft is not necessary. As a result, friction between the elastic member and the shaft can be reduced.

Optionally, an inner peripheral surface of the inner abutments of the outer sleeve of the first member may slidably contact the outer peripheral surface of the inner sleeve. Therefore, when the first member is displaced from the initial position relative to the second member, an excellent guidance and support of the first member moving axially relative to the second member can be achieved.

Optionally, the elastic member may include at least a first coil spring and a second coil spring arranged on a radially outer side of the first coil spring so as to circumferentially surround the first coil spring. As a result, depending on the purpose of use, various elastic characteristics can be appropriately chosen. In addition, compared to the use of only one coil spring, higher elastic restoring forces can be achieved.

Further benefits and advantages of the present invention will become apparent from the following detailed description of at least one exemplary embodiment for carrying out the present invention with reference to the accompanying drawings.

### BRIEF DESCRIPTION OF DRAWINGS

In the drawings:
Figure 1 is a schematic sectional view of a shift device according to a first embodiment of the present invention.
Figure 2 is a schematic sectional view of a shift device according to a second embodiment of the present invention.
Figure 3 is a schematic sectional view of a conventional shift device.

### DETAILED DESCRIPTION

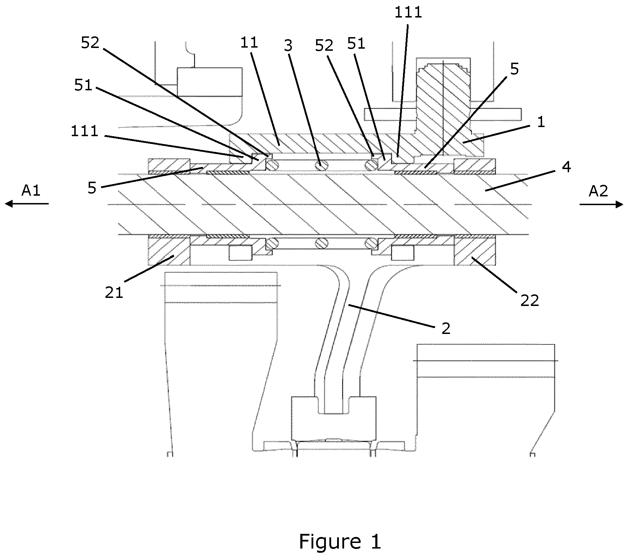

A first embodiment of the present invention is described below with reference to figure 1.

Figure 1 illustrates a schematic sectional view of the shift device according to the first embodiment. The shift device allows a relative axial movement between a first member 1 and a second member 2 and provides an elastic restoration to the initial position. In the first embodiment, the shift device is exemplified for the use in an electrically actuated shifting system. However, the shift device according to the invention is not limited to the use in the electrically actuated shifting system. In particular, the shift device according to the invention can be implemented in various fields, where a relative movement between two members and an elastic restoration to the initial position is required.

The shift device includes the first member 1, which is axially movably supported on a shaft 4. The first member 1 is in communication with an actuator of the shifting system (not shown) via a coupling mechanism, so that when the actuator is actuated, the first member 1 is shifted in the axial direction of the shaft 4. Depending on the control of the actuator, an axial movement of the first member 1 can be made in one axial direction (a first axial direction A1) or the other axial direction (a second axial direction A2) opposite to the first axial direction A1.

The first member 1 comprises an outer sleeve 11. The outer sleeve 11 is disposed so as to surround the shaft 4 at least partially in the circumferential direction. That is, the outer sleeve 11 may have a partially opened circumferential portion. At each axial end portion of the outer sleeve 11, an inner abutment 111 is formed by a protrusion projecting radially inwardly from an inner peripheral surface of the outer sleeve 11. The inner abutments 111 extend in a circumferential direction of the outer sleeve 11.

The first member 1 further comprises a coupling portion for coupling with the coupling mechanism. As shown in figure 1, the coupling portion is formed on an axial end portion (on the right end portion in figure 1). However, the design of the coupling portion is not limited to this and can be appropriately provided, e.g., on an axial central portion of the outer sleeve 11.

The shift device further includes two inner sleeves 5, which are axially movably supported on the shaft 4. The inner sleeves 5 are disposed so as to surround the shaft 4 at least partially in the circumferential direction. The inner sleeves 5 are disposed radially inwardly with respect to the outer sleeve 11. In particular, a diameter of an outer peripheral surface of the inner sleeves 5 is smaller than a diameter of an inner peripheral surface of the outer sleeve 11.

Furthermore, one of the two inner sleeves 5 is axially arranged such that one axial end portion of the inner sleeve 5 is disposed inside the outer sleeve 11. That is, one of the axial end portions of the outer sleeve 11 radially overlaps with the axial end portion of the inner sleeve 5 disposed inside the outer sleeve 11. Correspondingly, also the other of the two inner sleeves 5 is axially arranged such that one axial end portion of the inner sleeve 5 is disposed inside the outer sleeve 11. That is, the other of the axial end portions of the outer sleeve 11 radially overlaps with the axial end portion of the other of the inner sleeve 5 disposed inside the outer sleeve 11. The axial end portions of the inner sleeves 5, which are not disposed inside the outer sleeve 11, protrude from the outer sleeve 11 in the axial direction.

As mentioned above, the outer sleeve 11 is axially movably supported on the shaft 4. This support is provided via the two inner sleeves 5. In particular, an inner peripheral surface of the inner abutments 111 of the outer sleeve 11 slidably contacts the outer peripheral surface of the respective inner sleeve 5. Therefore, the inner sleeves 5 are axially movable with respect to the outer sleeve 11.

An outer abutment 51 is formed on each of the inner sleeves 5 at the axial end portion disposed inside the outer sleeve 11. The outer abutment 51 projects radially outwardly from the outer peripheral surface of the inner sleeve 5 and extends in the circumferential direction of the inner sleeve 5. An outer diameter of the outer abutment 51 of the inner sleeve 5 is larger than an inner diameter of the inner abutment 111 of the outer sleeve 1. Therefore, when the inner sleeve 5 is axially moved relative to the outer sleeve 11 in the axial direction, in which the inner sleeve protrudes from the outer sleeve, the outer abutment 51 of the inner sleeve 5 engages with the respective inner abutment 111 of the outer sleeve 11, thereby restricting the axial movement of the inner sleeve 5 relative to the outer sleeve 11.

An axial protrusion 52 is formed on an outer circumferential edge portion of the outer abutment 51 on an axial end side of the inner sleeve 5. The axial protrusion 52 partially covers an outer peripheral surface of an axial end portion of an elastic member 3 described below.

The shift device further comprises an elastic member 3. According to the first embodiment shown in figure 1, a coil spring is used as the elastic member 3. However, the present invention is not limited thereto. For example, plate springs or rubber members can be used as the elastic member 3. The elastic member 3 is elastically compressible in the axial direction.

The elastic member 3 is arranged concentrically around the shaft 4 so as to be axially aligned with the shaft 4. The elastic member 3 is arranged radially inside of the outer sleeve 11 of the first member 1. Furthermore, the elastic member 3 is arranged between the two inner sleeves 5 with respect to the axial direction. The elastic member 3 urges the two inner sleeves 5 in the direction in which the respective inner sleeve 5 protrudes out of the outer sleeve 11. That is, the elastic member 3 (i.e., an elastic restoring force) urges the outer abutments 51 of the inner sleeves 5 into contact with the respective inner abutment 111 of the outer sleeve 11. Furthermore, by compression of the elastic member 3, the inner sleeves 5 can be axially moved with respect to the outer sleeve 11 in a direction opposite to the direction in which the respective inner sleeve 5 protrudes out of the outer sleeve 11.

Outer peripheral surfaces of the axial end portions of the elastic members 3 are at least partially covered by the axial protrusion 52 of the inner sleeve 5. The axial protrusions 52 serve for axial centering of the elastic member 3.

The shift device includes the second member 2, which is axially movably supported on the shaft 4. The second member 2 is in communication with a shift member of the shifting system, such as a shift fork and/or a shift sleeve (e.g., a sliding collar or a dog clutch). The second member 2 includes a first bearing portion 21 and a second bearing portion 22. The first and second bearing portions 21, 22 serve for axially movably supporting the second member 2 on the shaft 4. In particular, the first and second bearing portions 21, 22 are formed substantially in a ring shape coaxially arranged with the shaft 4.

The first bearing portion 21 and the second bearing portion 22 are spaced apart from each other in the axial direction. The outer sleeve 11 of the first member 1 and the inner sleeves 5 are interposed between the first bearing portion 21 and the second bearing portion 22. In particular, a axial distance from an axial end side of the first bearing portion 21 facing the second bearing portion 22 to an axial end side of the second bearing portion 22 facing the first bearing portion 21 is substantially equal to a distance from an axial end side of one inner sleeve 5 facing the first bearing portion 21 to an axial end side of the other inner sleeve 5 facing the second bearing portion 22, when the outer abutments 51 of the inner sleeves 5 contact the respective inner abutment 111 of the outer sleeve 11. Consequently, in a state, in which the outer abutments 51 of the inner sleeves 5 contact the respective inner abutment 111 of the outer sleeve 11, the axial end side of one inner sleeve 5 contacts the axial end side of the first bearing portion 21 facing the second bearing portion 22, and the axial end side of the other inner sleeve 5 contacts the axial end side of the second bearing portion 22 facing the first bearing portion 22.

In the following, operation of the shift device according to the first embodiment of the present invention is described with reference to figure 1.

In the shift device according to the first embodiment described above, the second member 2 is engaged with the first member 1 such that an axial movement of the first member 1 is transmitted to the second member 2 via the elastic member 3. In particular, when the first member 1 is moved axially toward the first axial direction A1 (e.g., to the left in figure 1) upon operation of the actuator of the shifting system, the axial movement of the first member 1 is transmitted to one of the two inner sleeves 5 (e.g., the right inner sleeve 5 in figure 1) via the engagement of the inner abutment 111 of the outer sleeve 11 with the outer abutment 51 of the inner sleeve 5. The axial movement of the one inner sleeve 5 is transmitted to the other inner sleeve 5 (e.g., the left inner sleeve 5 in figure 1) via the elastic member 3. The axial movement of the other inner sleeve 5 is transmitted to the second member 2 via one of the first and second bearing portions 21, 22 (e.g., the first bearing portion 21) being in contact with the other inner sleeve 5. As a result, the second member 22 axially moves the shift member and, for example, a shift sleeve connected to the shift member is engaged with a gear of a manual transmission.

In the shifting process described above, the first member 1 and the second member 2 both move axially with respect to the shaft. That is, the first member 1 does not move axially relative to the second member 2. Thus, the first member 1 remains in an initial position (i.e., a neutral position) relative to the second member 2, as it is shown in figure 1.

In the following, the shifting process is described for a situation when the axial movement of the shift member of the shifting system is restricted, for example, due to a tooth-to-tooth position with the gear.

Initially, the axial movement is transmitted from the first element 1 to the second element 2 as described above. However, when the axial movement of the shift member connected to the second member 2 is restricted, the axial movement of the second member 2 is also restricted. As a result, the axial movement of the inner sleeve 5, which is provided on the axial end side of the outer sleeve 11 facing in the axial moving direction of the first member 1, is restricted by contacting one of the first and second bearing portions 21, 22 of the second member 2. The inner sleeve 5, which is provided on the axial end side of the outer sleeve 11 facing opposite to the axial moving direction of the first member 1, is still moved axially by the engagement of the outer abutment 52 with the inner abutment 111 of the outer sleeve 11. Therefore, the elastic member 3 is compressed between the two inner sleeves 5. As a result, the first member 1 moves axially while the second member 2 does not move axially. That is, the first member 1 is moved axially relative to the second member 2 and deviates from its initial position relative to the second member 2.

When the first member 1 is moved in the first axial direction A1 relative to the second member 2, the inner sleeve 5 provided on the axial end side of the outer sleeve 11 in the first axial direction A1 is displaced relative to the outer sleeve 11 so as to space the outer abutment 51 from the respective inner abutment 111. The inner sleeve 5 provided on the axial end side of the outer sleeve 11 in the second axial direction A2 is displaced from the second bearing portion 22 so as to space the inner sleeve 5 from the second bearing portion 22.

Correspondingly, when the first member 1 is moved in the second axial direction A2 relative to the second member 2, the inner sleeve 5 provided on the axial end side of the outer sleeve 11 in the second axial direction A2 is displaced relative to the outer sleeve 11 so as to space the outer abutment 51 from the respective inner abutment 111. The inner sleeve 5 provided on the axial end side of the outer sleeve 11 in the first axial direction A1 is displaced from the first bearing portion 21 so as to space the inner sleeve 5 from the second bearing portion 21.

Therefore, the elastic member 3, by being compressed, allows relative axial movement in both the first axial direction A1 and the opposite second axial direction A2 between the first member 1 and the second member 2 so that one of the first member 1 and the second member 2 is displaced from an initial position relative to the other of the first member and the second member 2.

The elastic member 3 is appropriately adapted to compensate for the relative axial movement of the first member 1 with respect to the second member 2 without interrupting the operation of the actuator before the intended end position is reached. Typical dimensions for the axial movement during the shifting process (i.e., a specific amount) are, for example, about 11 mm. Therefore, the elastic member 3 is designed to be compressible by at least about 11 mm (i.e., the specific amount) when the elastic member 3 is arranged inside the outer sleeve 11 and between the two inner sleeves 5 (i.e., in an installed state). The tooth-to-tooth position occurs, for example, after an axial movement of about 2 mm. Consequently, the elastic member 3 is able to compensate for the relative movement between the first member 1 and the second member 2, which is, for example, approximately 9 mm.

When the restriction on the axial movement of the shift member is released (e.g., the tooth-to-tooth position is released),the elastic restoring force of the elastic member 3 urges the first member 1 in the second axial direction A2 and the second member 2 in the first axial direction A1 (according to the above described example). Consequently, the second member 2 is axially moved, thereby axially moving the shift member so as to complete the shifting process of the shift member.

In particular, the elastic restoring force of the elastic member 3 ensures that the first member 1 is moved axially to its initial position relative to the second member 2, when the axial movement of the second member 2 (i.e., the shift member) is no longer restricted. Thus, after the restriction of the axial movement is removed, the shift device returns to the initial position described above.

According to the first embodiment of the present invention, the first member 1 communicates with the actuator of the shifting system and the second member 2 communicates with the shift member of the shifting system. However, the first embodiment can be modified so that the second member 2 communicates with the actuator and the first member 1 communicates with the shift member. This arrangement also provides the same effects and advantages as the first embodiment.

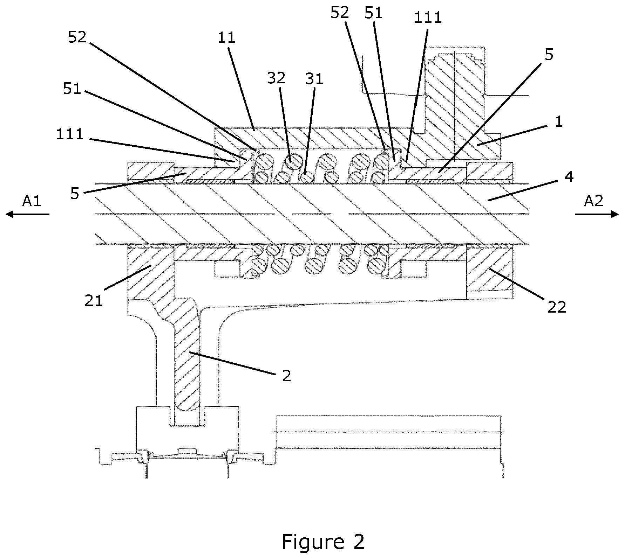

A second embodiment of the present invention is described below with reference to figure 2.

The second embodiment differs from the first embodiment in that the elastic member 3 comprises a first coil spring 31 and a second coil spring 32. The second coil spring 32 is arranged on a radially outer side of the first coil spring 32. The first coil spring 31 and the second coil spring 32 are arranged axially aligned with the shaft 4. The first coil spring 31 and the second coil spring 32 are axially arranged between the two inner sleeves 5 and radially inside of the outer sleeve 5.

By providing of the first coil spring 31 and the second coil spring 32, higher elastic restoring forces can be achieved compared to using only one coil spring. In addition, the same effects and advantages can be achieved as with the first embodiment.

The above-described embodiments of the present invention can be appropriately modified or combined. The above description is not exhaustive, and the present invention is not limited to the above embodiments. The skilled person will recognize that various modifications and combinations of the features included in the above embodiments are possible within the scope of the invention, as defined in the claims.

## Claims

1. Shift device, comprising:
a first member (1) axially movably supported on a shaft (4), the first member (1) comprising a coupling portion for coupling with a coupling mechanism which is in communication with an actuator of a shifting system;
a second member (2) axially movably supported on the shaft (4), and
an elastic member (3) arranged on the shaft (4) and elastically compressible in the axial direction of the shaft (4), wherein
the second member (2) is engaged with the first member (1) such that an axial movement of the first member (1) is transmitted to the second member (2) and vice versa via the elastic member (3),
the elastic member (3), by being compressed, allows relative axial movement in both a first axial direction (A1) and the opposite second axial direction (A2) between the first member (1) and the second member (2) so that one of the first member (1) and the second member (2) is displaced from an initial position relative to the other of the first member (1) and the second member (2), and
the elastic member (3), in a compressed state, exerts an urging force on the first member (1) and the second member (2), thereby urging the one of the first member (1) and the second member (2) towards the initial position relative to the other of the first member (1) and the second member (2),
wherein the shift device further comprises two inner sleeves (5) axially movably supported on the shaft (4),
and wherein the elastic member (3) is arranged axially between the two inner sleeves (5)
**characterized in that**
the first member (1) comprises an outer sleeve (11) disposed radially outwardly of the inner sleeves (5),
the outer sleeve (11) is axially movably supported on the shaft (4) via the inner sleeves (5),
the inner sleeves (5) are axially movable with respect to the outer sleeve (11).

2. Shift device according to claim 1, wherein
one of the two inner sleeves (5) is arranged at one axial end of the outer sleeve (11) at least partially inside the outer sleeve (11),
the other of the two inner sleeves (5) is arranged at the other axial end of the outer sleeve (11) at least partially inside the outer sleeve (11),
the inner sleeves (5) each have at an axial end, which is arranged inside the outer sleeve (11), an outer abutment (51) projecting radially outwardly from an outer peripheral surface of the inner sleeve (5) and extending in the circumferential direction of the inner sleeve (5),
the outer sleeve (11) has at each of the axial ends an inner abutment (111) projecting radially inwardly from an inner peripheral surface of the outer sleeve (11) and extending in the circumferential direction of the outer sleeve (11), and
the outer abutment (51) of the inner sleeve (5) engages the respective inner abutment (111) of the outer sleeve (11) such that an axial movement of the inner sleeve (5) relative to the outer sleeve (11) is restricted.

3. Shift device according to claim 2, wherein
the elastic member (3) is arranged inside the outer sleeve (11) and urges the inner sleeves (5) in the axial direction towards the respective axial end of the outer sleeve (11),
when the one of the first member (1) and the second member (2) is in the initial position relative to the other of the first member (1) and the second member (2), the outer abutments (51) of the inner sleeves (5) abut the respective inner abutment (111) of the outer sleeve (11), and,
when the one of the first member (1) and the second member (2) is displaced from the initial position relative to the other of the first member (1) and the second member (2), one of the inner sleeves (5) is displaced relative to the outer sleeve (11) so as to space the outer abutment (51) from the respective inner abutment (111), thereby compressing the elastic member (3) between the inner sleeves (5).

4. Shift device according to any one of claims 2 to 3, wherein
the second member (2) includes a first bearing portion (21) and a second bearing portion (22) for axially movably supporting the second member (2) on the shaft (4),
the outer sleeve (11) of the first member (1) and the inner sleeves (5) are interposed between the first bearing portion (21) and the second bearing portion (22),
when the one of the first member (1) and the second member (2) is in the initial position relative to the other of the first member (1) and the second member (2), one of the inner sleeves (5) abuts the first bearing portion (21) of the second member (2) and the other of the inner sleeves (5) abuts the second bearing portion (22) of the second member (2), and,
when the one of the first member (1) and the second member (2) is displaced from the initial position relative to the other of the first member (1) and the second member (2), one of the inner sleeves (5) is displaced from the first or second bearing portion (21, 22) so as to space the respective inner sleeve (5) from the first or second bearing portion (21, 22), thereby compressing the elastic member (3) between the inner sleeves (5).

5. Shift device according to any one of claims 2 to 4, wherein
the inner sleeve (5) includes an axial protrusion (52) formed on an outer circumferential edge portion of the outer abutment (51) on an axial end side of the inner sleeve (5), and
the axial protrusion (52) partially covers an outer peripheral surface of an axial end portion of the elastic member (3).

6. Shift device according to any one of claims 2 to 5, wherein
an inner peripheral surface of the inner abutments (111) of the outer sleeve (11) slidably contacts the outer peripheral surface of the respective inner sleeve (5).

7. Shift device according to any one of claims 1 to 7, wherein
the elastic member (3) is a coil spring.

8. Shift device according to claim 7, wherein
the elastic member (3) includes at least a first coil spring (31) and a second coil spring (32),
the second coil spring (32) is arranged on a radially outer side of the first coil spring (31) so as to circumferentially surround the first coil spring (31).

9. Shifting system comprising
an actuator,
a shift member for shifting a shift sleeve configured to engage and disengage gears of a transmission, and
the shift device according to any one of the preceding claims, wherein
the actuator is in communication with the first member (1) of the shift device, and
the shift member is in communication with the second member (2) of the shift device,
when the actuator is operated, the first member (1) is moved in the axial direction by a specific amount,
when an axial movement of the shift member is not restricted, the axial movement of the first member (1) is transmitted to the second member (2) so that the second member (2) is moved in the axial direction by the specific amount,
when an axial movement of the shift member is restricted, the first member (1) is displaced from an initial position relative to the second member (2), thereby compressing the elastic member (3), and
when the restriction on the axial movement of the shift member is released, the elastic member (3) urges the first member (1) to the initial position relative to the second member (2), thereby axially moving the shift member by the specific amount so as to perform a shifting operation.

10. Shifting system according to claim 9, wherein
the shift member and the second member (2) are formed integrally.

11. Shifting system according to claim 10, wherein
the shift member is a shift fork configured to engage the shift sleeve and reciprocate the shift sleeve in the axial direction.

12. Shifting system according to any one of claims 8 to 11, wherein
the elastic member (3) is configured to be compressible in an installed state by at least the specific amount.

## Patentansprüche

1. Schaltvorrichtung, umfassend:
ein erstes Element (1), das axial beweglich auf einer Welle (4) gelagert ist, wobei das erste Element (1) einen Kopplungsabschnitt zum Koppeln mit einem Kopplungsmechanismus umfasst, der mit einer Betätigungsvorrichtung eines Schaltsystems in Verbindung steht;
ein zweites Element (2), das axial beweglich auf der Welle (4) gelagert ist, und
ein elastisches Element (3), das auf der Welle (4) angeordnet und in axialer Richtung der Welle (4) elastisch komprimierbar ist, wobei
das zweite Element (2) mit dem ersten Element (1) derart in Eingriff steht, dass eine axiale Bewegung des ersten Elements (1) über das elastische Element (3) auf das zweite Element (2) übertragen wird und umgekehrt,
das elastische Element (3) durch seine Kompression eine relative axiale Bewegung sowohl in einer ersten axialen Richtung (A1) als auch in der entgegengesetzten zweiten axialen Richtung (A2) zwischen dem ersten Element (1) und dem zweiten Element (2) ermöglicht, sodass eines von dem ersten Element (1) und dem zweiten Element (2) relativ zum anderen von dem ersten Element (1) und dem zweiten Element (2) aus einer Ausgangsposition verschoben wird, und
das elastische Element (3) im komprimierten Zustand eine Druckkraft auf das erste Element (1) und das zweite Element (2) ausübt und dadurch das eine von dem ersten Element (1) und dem zweiten Element (2) in Richtung der Ausgangsposition relativ zum anderen von dem ersten Element (1) und dem zweiten Element (2) drückt,
wobei die Schaltvorrichtung weiter zwei innere Hülsen (5) umfasst, die axial beweglich auf der Welle (4) gelagert sind,
und wobei das elastische Element (3) axial zwischen den beiden inneren Hülsen (5) angeordnet ist, **dadurch gekennzeichnet, dass**
das erste Element (1) eine äußere Hülse (11) umfasst, die radial außerhalb der inneren Hülsen (5) angeordnet ist,
die äußere Hülse (11) über die inneren Hülsen (5) axial beweglich auf der Welle (4) gelagert ist,
die inneren Hülsen (5) in Bezug auf die äußere Hülse (11) axial beweglich sind.

2. Schaltvorrichtung nach Anspruch 1, wobei
eine der beiden inneren Hülsen (5) an einem axialen Ende der äußeren Hülse (11) zumindest teilweise innerhalb der äußeren Hülse (11) angeordnet ist,
die andere der beiden inneren Hülsen (5) am anderen axialen Ende der äußeren Hülse (11) zumindest teilweise innerhalb der äußeren Hülse (11) angeordnet ist,
die inneren Hülsen (5) jeweils an einem axialen Ende, das innerhalb der äußeren Hülse (11) angeordnet ist, einen äußeren Anschlag (51) aufweisen, der radial von einer äußeren Umfangsfläche der inneren Hülse (5) nach außen vorsteht und sich in Umfangsrichtung der inneren Hülse (5) erstreckt,
die äußere Hülse (11) an jedem ihrer axialen Enden einen inneren Anschlag (111) aufweist, der von einer inneren Umfangsfläche der äußeren Hülse (11) radial nach innen vorsteht und sich in Umfangsrichtung der äußeren Hülse (11) erstreckt, und
der äußere Anschlag (51) der inneren Hülse (5) mit dem jeweiligen inneren Anschlag (111) der äußeren Hülse (11) in Eingriff steht, sodass eine axiale Bewegung der inneren Hülse (5) relativ zur äußeren Hülse (11) eingeschränkt wird.

3. Schaltvorrichtung nach Anspruch 2, wobei
das elastische Element (3) innerhalb der äußeren Hülse (11) angeordnet ist und die inneren Hülsen (5) in axialer Richtung zum jeweiligen axialen Ende der äußeren Hülse (11) drückt,
wenn sich das eine von dem ersten Element (1) und dem zweiten Element (2) in der Ausgangsposition relativ zum anderen von dem ersten Element (1) und dem zweiten Element (2) befindet, liegen die äußeren Anschläge (51) der inneren Hülsen (5) am jeweiligen inneren Anschlag (111) der äußeren Hülse (11) an, und
wenn das eine von dem ersten Element (1) und dem zweiten Element (2) relativ zum anderen von dem ersten Element (1) und dem zweiten Element (2) aus der Ausgangsposition verschoben wird, wird eine der inneren Hülsen (5) relativ zur äußeren Hülse (11) so verschoben, dass der äußere Anschlag (51) vom jeweiligen inneren Anschlag (111) beabstandet wird, wodurch das elastische Element (3) zwischen den inneren Hülsen (5) zusammengedrückt wird.

4. Schaltvorrichtung nach einem der Ansprüche 2 oder 3, wobei
das zweite Element (2) einen ersten Lagerabschnitt (21) und einen zweiten Lagerabschnitt (22) zur axial beweglichen Lagerung des zweiten Elements (2) auf der Welle (4) einschließt,
die äußere Hülse (11) des ersten Elements (1) und die inneren Hülsen (5) zwischen dem ersten Lagerabschnitt (21) und dem zweiten Lagerabschnitt (22) eingefügt sind,
wenn sich das eine von dem ersten Element (1) und dem zweiten Element (2) in der Ausgangsposition relativ zum anderen von dem ersten Element (1) und dem zweiten Element (2) befindet, liegt eine der inneren Hülsen (5) am ersten Lagerabschnitt (21) des zweiten Elements (2) an und die andere der inneren Hülsen (5) liegt am zweiten Lagerabschnitt (22) des zweiten Elements (2) an,
wenn das eine von dem ersten Element (1) und dem zweiten Element (2) relativ zum anderen von dem ersten Element (1) und dem zweiten Element (2) aus der Ausgangsposition verschoben wird, wird eine der inneren Hülsen (5) aus dem ersten oder zweiten Lagerabschnitt (21, 22) so verschoben, dass die jeweilige innere Hülse (5) vom ersten oder zweiten Lagerabschnitt (21, 22) beabstandet wird, wodurch das elastische Element (3) zwischen den inneren Hülsen (5) zusammengedrückt wird.

5. Schaltvorrichtung nach einem der Ansprüche 2 bis 4, wobei
die innere Hülse (5) an einem äußeren Umfangsrandabschnitt des äußeren Anschlags (51) an einer axialen Endseite der inneren Hülse (5) einen axialen Vorsprung (52) einschließt, und
der axiale Vorsprung (52) teilweise eine äußere Umfangsfläche eines axialen Endabschnitts des elastischen Elements (3) bedeckt.

6. Schaltvorrichtung nach einem der Ansprüche 2 bis 5, wobei
eine innere Umfangsfläche der inneren Anschläge (111) der äußeren Hülse (11) in gleitendem Kontakt mit der äußeren Umfangsfläche der jeweiligen inneren Hülse (5) steht.

7. Schaltvorrichtung nach einem der Ansprüche 1 bis 7, wobei das elastische Element (3) eine Schraubenfeder ist.

8. Schaltvorrichtung nach Anspruch 7, wobei
das elastische Element (3) mindestens eine erste Schraubenfeder (31) und eine zweite Schraubenfeder (32) einschließt,
die zweite Schraubenfeder (32) radial außen an der ersten Schraubenfeder (31) angeordnet ist, sodass sie die erste Schraubenfeder (31) umlaufend umschließt.

9. Schaltsystem, umfassend:
eine Betätigungsvorrichtung,
ein Schaltelement zum Schalten einer Schalthülse, die zum Ein- und Ausrücken von Gängen eines Getriebes konfiguriert ist, und
die Schaltvorrichtung nach einem der vorstehenden Ansprüche, wobei
die Betätigungsvorrichtung in Verbindung mit dem ersten Element (1) der Schaltvorrichtung steht, und
das Schaltelement in Verbindung mit dem zweiten Element (2) der Schaltvorrichtung steht,
wenn die Betätigungsvorrichtung betätigt wird, wird das erste Element (1) um einen bestimmten Betrag in axialer Richtung bewegt,
wenn eine axiale Bewegung des Schaltelements nicht eingeschränkt ist, wird die axiale Bewegung des ersten Elements (1) so auf das zweite Element (2) übertragen, dass das zweite Element (2) in axialer Richtung um den bestimmten Betrag bewegt wird,
wenn eine axiale Bewegung des Schaltelements eingeschränkt ist, wird das erste Element (1) relativ zum zweiten Element (2) aus einer Ausgangsposition verschoben, wodurch das elastische Element (3) zusammengedrückt wird, und
wenn die Einschränkung der axialen Bewegung des Schaltelements aufgehoben wird, drückt das elastische Element (3) das erste Element (1) relativ zum zweiten Element (2) in die Ausgangsposition, wodurch das Schaltelement axial um den spezifischen Betrag so bewegt wird, dass ein Schaltvorgang durchgeführt wird.

10. Schaltsystem nach Anspruch 9, wobei
das Schaltelement und das zweite Element (2) einstückig ausgebildet sind.

11. Schaltsystem nach Anspruch 10, wobei
das Schaltelement eine Schaltgabel ist, die so konfiguriert ist, dass sie in die Schalthülse eingreift und die Schalthülse in axialer Richtung hin und her bewegt.

12. Schaltsystem nach einem der Ansprüche 8 bis 11, wobei
das elastische Element (3) so konfiguriert ist, dass es im eingebauten Zustand um mindestens den spezifischen Betrag komprimierbar ist.

## Revendications

1. Dispositif de changement de vitesse, comprenant :
un premier organe (1) supporté axialement de manière mobile sur un arbre (4), le premier organe (1) comprenant une partie de couplage destinée à être couplée à un mécanisme de couplage qui est en communication avec un actionneur d'un système de changement de vitesse ;
un second organe (2) supporté axialement de manière mobile sur l'arbre (4), et
un organe élastique (3) agencé sur l'arbre (4) et élastiquement compressible dans la direction axiale de l'arbre (4), dans lequel
le second organe (2) est engagé avec le premier organe (1) de sorte qu'un mouvement axial du premier organe (1) soit transmis au second organe (2) et vice versa via l'organe élastique (3),
l'organe élastique (3), en étant comprimé, permet un mouvement axial relatif à la fois dans une première direction axiale (A1) et dans la seconde direction axiale opposée (A2) entre le premier organe (1) et le second organe (2), de sorte que l'un du premier organe (1) et du second organe (2) soit déplacé de la position initiale par rapport à l'autre du premier organe (1) et du second organe (2), et
l'organe élastique (3), à l'état comprimé, exerce une force de poussée sur le premier organe (1) et le second organe (2), poussant ainsi l'un du premier organe (1) et du second organe (2) vers la position initiale par rapport à l'autre du premier organe (1) et du second organe (2),
dans lequel le dispositif de changement de vitesse comprend en outre deux manchons intérieurs (5) supportés axialement de manière mobile sur l'arbre (4),
et dans lequel l'organe élastique (3) est agencé axialement entre les deux manchons intérieurs (5), **caractérisés en ce que**
le premier organe (1) comprend un manchon extérieur (11) disposé radialement vers l'extérieur des manchons intérieurs (5),
le manchon extérieur (11) est supporté axialement de manière mobile sur l'arbre (4) via les manchons intérieurs (5),
les manchons intérieurs (5) sont mobiles axialement par rapport au manchon extérieur (11).

2. Dispositif de changement de vitesse selon la revendication 1, dans lequel
l'un des deux manchons intérieurs (5) est agencé à une extrémité axiale du manchon extérieur (11) au moins partiellement à l'intérieur du manchon extérieur (11),
l'autre des deux manchons intérieurs (5) est agencé à l'autre extrémité axiale du manchon extérieur (11) au moins partiellement à l'intérieur du manchon extérieur (11),
chacun des manchons intérieurs (5) présente, à une extrémité axiale, qui est agencée à l'intérieur du manchon extérieur (11), une butée extérieure (51) faisant saillie radialement vers l'extérieur à partir d'une surface périphérique extérieure du manchon intérieur (5) et s'étendant dans la direction circonférentielle du manchon intérieur (5),
le manchon extérieur (11) présente, à chacune des extrémités axiales, une butée intérieure (111) faisant saillie radialement vers l'intérieur à partir d'une surface périphérique intérieure du manchon extérieur (11) et s'étendant dans la direction circonférentielle du manchon extérieur (11), et
la butée extérieure (51) du manchon intérieur (5) s'engage avec la butée intérieure (111) respective du manchon extérieur (11) de sorte qu'un mouvement axial du manchon intérieur (5) par rapport au manchon extérieur (11) soit limité.

3. Dispositif de changement de vitesse selon la revendication 2, dans lequel
l'organe élastique (3) est agencé à l'intérieur du manchon extérieur (11) et pousse les manchons intérieurs (5) dans la direction axiale vers l'extrémité axiale respective du manchon extérieur (11),
lorsque l'un du premier organe (1) et du second organe (2) est dans la position initiale par rapport à l'autre du premier organe (1) et du second organe (2), les butées extérieures (51) des manchons intérieurs (5) butent contre la butée intérieure (111) respective du manchon extérieur (11), et,
lorsque l'un du premier organe (1) et du second organe (2) est déplacé de la position initiale par rapport à l'autre du premier organe (1) et du second organe (2), l'un des manchons intérieurs (5) est déplacé par rapport au manchon extérieur (11) afin d'espacer la butée extérieure (51) de la butée intérieure (111) respective, comprimant ainsi l'organe élastique (3) entre les manchons intérieurs (5).

4. Dispositif de changement de vitesse selon l'une quelconque des revendications 2 à 3, dans lequel
le second organe (2) inclut une première partie de palier (21) et une seconde partie de palier (22) pour supporter axialement de manière mobile le second organe (2) sur l'arbre (4),
le manchon extérieur (11) du premier organe (1) et les manchons intérieurs (5) sont interposés entre la première partie de palier (21) et la seconde partie de palier (22),
lorsque l'un du premier organe (1) et du second organe (2) est dans la position initiale par rapport à l'autre du premier organe (1) et du second organe (2), l'un des manchons intérieurs (5) bute contre la première partie de palier (21) du second organe (2) et l'autre des manchons intérieurs (5) bute contre la seconde partie de palier (22) du second organe (2), et,
lorsque l'un du premier organe (1) et du second organe (2) est déplacé de la position initiale par rapport à l'autre du premier organe (1) et du second organe (2), l'un des manchons intérieurs (5) est déplacé de la première ou de la seconde partie de palier (21, 22) de manière à espacer le manchon intérieur (5) respectif de la première ou de la seconde partie de palier (21, 22), comprimant ainsi l'organe élastique (3) entre les manchons intérieurs (5).

5. Dispositif de changement de vitesse selon l'une quelconque des revendications 2 à 4, dans lequel
le manchon intérieur (5) inclut une protubérance axiale (52) formée sur une partie de bord circonférentiel extérieur de la butée extérieure (51) sur un côté d'extrémité axiale du manchon intérieur (5), et
la protubérance axiale (52) recouvre partiellement une surface périphérique extérieure d'une partie d'extrémité axiale de l'organe élastique (3).

6. Dispositif de changement de vitesse selon l'une quelconque des revendications 2 à 5, dans lequel
une surface périphérique intérieure des butées intérieures (111) du manchon extérieur (11) entre en contact coulissant avec la surface périphérique extérieure du manchon intérieur (5) respectif.

7. Dispositif de changement de vitesse selon l'une quelconque des revendications 1 à 7, dans lequel
l'organe élastique (3) est un ressort hélicoïdal.

8. Dispositif de changement de vitesse selon la revendication 7, dans lequel
l'organe élastique (3) inclut au moins un premier ressort hélicoïdal (31) et un second ressort hélicoïdal (32),
le second ressort hélicoïdal (32) est agencé sur un côté extérieur radial du premier ressort hélicoïdal (31) de manière à entourer circonférentiellement le premier ressort hélicoïdal (31).

9. Système de changement de vitesse comprenant :
un actionneur,
un organe de changement de vitesse pour actionner un manchon de changement de vitesse configuré pour engager et désengager des vitesses d'une transmission, et
le dispositif de changement de vitesse selon l'une quelconque des revendications précédentes, dans lequel
l'actionneur est en communication avec le premier organe (1) du dispositif de changement de vitesse, et
l'organe de changement de vitesse est en communication avec le second organe (2) du dispositif de changement de vitesse,
lorsque l'actionneur est utilisé, le premier organe (1) est déplacé dans la direction axiale d'une quantité spécifique,
lorsqu'un mouvement axial de l'organe de changement de vitesse n'est pas limité, le mouvement axial du premier organe (1) est transmis au second organe (2) de sorte que le second organe (2) se déplace dans la direction axiale de la quantité spécifique,
lorsqu'un mouvement axial de l'organe de changement de vitesse est limité, le premier organe (1) est déplacé de la position initiale par rapport au second organe (2), comprimant ainsi l'organe élastique (3), et
lorsque la limitation du mouvement axial de l'organe de changement de vitesse est retirée, l'organe élastique (3) pousse le premier organe (1) vers la position initiale par rapport au second organe (2), déplaçant ainsi axialement l'organe de changement de vitesse de la quantité spécifique afin de réaliser une opération de changement de vitesse.

10. Système de changement de vitesse selon la revendication 9, dans lequel
l'organe de changement de vitesse et le second organe (2) sont formés d'un seul tenant.

11. Système de changement de vitesse selon la revendication 10, dans lequel
l'organe de changement de vitesse est une fourchette de changement de vitesse configurée pour s'engager avec le manchon de changement de vitesse et déplacer le manchon de changement de vitesse en va-et-vient dans la direction axiale.

12. Système de changement de vitesse selon l'une quelconque des revendications 8 à 11, dans lequel
l'organe élastique (3) est configuré pour pouvoir être comprimé dans un état installé d'au moins la quantité spécifique.
